# EUROPEAN PATENT APPLICATION

(11) **EP 4 618 581 A1**
(43) Date of publication of application: **17.09.2025**
(21) Application number: 22965025.4
(22) Date of filing: 07.11.2022
(51) Int. Cl.: H04Q 9/00

(54) **DATA TRANSMISSION DEVICE, DATA COLLECTION DEVICE, WIRELESS SYSTEM, DATA TRANSMISSION DEVICE CONTROL METHOD, DATA COLLECTION METHOD, AND PROGRAM**

(71) Applicant: SUMITOMO ELECTRIC INDUSTRIES, LTD., Osaka-shi, Osaka 541-0041 (JP)
(72) Inventor: TANAKA, Yoshizo, Osaka-shi, Osaka 541-0041 (JP)
(74) Representative: Boult Wade Tennant LLP
(86) International application number: PCT/JP2022/041312
(87) International publication number: WO 2024/100697

(57) **Abstract**

This data transmission device has a wireless communication unit, and includes a non-volatile memory that stores an identifier uniquely assigned to the data transmission device. The non-volatile memory can also store a name assigned to the data transmission device. The data transmission device also includes a notification unit that includes the identifier in notification data and uses the wireless communication unit to perform broadcast transmits. If the name is stored in the non-volatile memory, the notification unit includes the name, in addition to the identifier, in the notification data and broadcast-transmits the same. The data transmission device also includes a communication control unit that, in response to receiving a connection request specifying the identifier from a data collection device which is a data transmission destination, starts data transmission to the data collection device by using the wireless communication unit.

## Description

### TECHNICAL FIELD

The present disclosure relates to a data transmission device, a data collection device, a wireless system, a method of controlling a data transmission device, a data collection method, and a program.

### BACKGROUND ART

A strong impact is applied to a cutting tool, generating high heat. As a result, abrasion and defects occur on the tool. To prevent the occurrence of such malfunctions, it is necessary to monitor the state of the cutting tool during operation. To do so, the main body of the cutting tool is provided with a thermal sensor and an acceleration sensor, and their outputs are collected.

Recently, it has been proposed to provide a main body of a cutting tool with a wireless communicator for data transmission, and data collected from the sensors is wirelessly transmitted to a data collection device (PTL 1).

### CITATION LIST

### PATENT LITERATURE

PTL 1: Japanese Unexamined Patent Application Publication No. 2020-62746

### SUMMARY OF INVENTION

A data transmission device according to a first aspect of the present disclosure is a data transmission device with a wireless communication unit, including: a non-volatile memory configured to store an identifier uniquely assigned to the data transmission device, the non-volatile memory being configured to be capable of further storing a name assigned to the data transmission device; an advertising unit configured to incorporate the identifier in advertisement data and broadcast the advertisement data including the identifier via the wireless communication unit, wherein, in a case where the name is stored in the non-volatile memory, the advertising unit is configured to incorporate the name, in addition to the identifier, in the advertisement data and broadcast the advertisement data; and a communication control unit configured to initiate data transmission using the wireless communication unit to a data collection device serving as a data transmission destination in response to receiving a connection request specifying the identifier from the data collection device.

The present invention can be realized not only as a data transmission device or a data collection device including such a characteristic processor, but also as a data transmission method or a data collection method including such a characteristic process as steps, or as a program for causing a computer to execute the steps. It can also be realized as a semiconductor integrated circuit that realizes a portion or all of the data transmission device and the data collection device, or as a wireless system including the data transmission device or the data collection device.

### BRIEF DESCRIPTION OF DRAWINGS

FIG. 1 is a block diagram illustrating a configuration of a data collection system according to a first embodiment of the present disclosure.
FIG. 2 is a block diagram of a data transmitter illustrated in FIG. 1.
FIG. 3 is a schematic diagram illustrating a cutting tool provided with the data transmitter illustrated in FIG. 2.
FIG. 4 is a block diagram of a wireless receiver illustrated in FIG. 1.
FIG. 5 is a block diagram of a terminal illustrated in FIG. 1.
FIG. 6 is a timing chart illustrating communication between the terminal, the wireless receiver, and the data transmitter illustrated in FIG. 1.
FIG. 7 includes diagrams each illustrating the data configuration of data transmitted from the data transmitter to the wireless receiver illustrated in FIG. 1.
FIG. 8 is a screen transition diagram of the terminal illustrated in FIG. 1.
FIG. 9 is a flowchart illustrating the control structure of a program executed by the terminal 60 when a user presses a connection button on a main screen illustrated in FIG. 8.
FIG. 10 is a flowchart illustrating the control structure of a program executed by the terminal when the user presses a connection button on a selection screen illustrated in FIG. 8.
FIG. 11 is a flowchart illustrating the control structure of a program executed by the terminal when the user presses a setting button on the main screen illustrated in FIG. 8.
FIG. 12 is a flowchart illustrating the control structure of a program executed by the terminal when the user presses a change button on a settings screen illustrated in FIG. 8.
FIG. 13 is a flowchart illustrating the control structure of a program executed by the terminal when the user presses a data display button on the main screen illustrated in FIG. 8.

FIG. 14 is a flowchart illustrating the control structure of a program executed by a CPU (Central Processing Unit) when the data transmitter illustrated in FIG. 2 receives a configuration information setting request from the terminal.

### DETAILED DESCRIPTION

### [Problems to be Solved by Present Disclosure]

With the techniques disclosed in PTL 1, each tool can communicate directly with the data collection device. Therefore, cables and the like for the data collection device to collect sensor data are unnecessary, and processing work becomes easier.

However, cutting tools are mounted on and detached from machine tools. Therefore, it is necessary to correctly set in the data collection device which cutting tool is mounted on the machine tool. When using wireless communication, the data collection device can communicate with multiple cutting tools. Thus, there is a problem that, when collecting sensor data, it is cumbersome to correctly associate the collected data with a wireless communication device.

It is an object of the present disclosure to provide a data transmission device, a data collection device, a wireless system, a method of controlling a data transmission device, a data collection method, and a program that, when the data collection device communicates with a wireless communicator, facilitate the identification of the wireless communicator.

### [Advantageous Effects of Present Disclosure]

According to the present disclosure, as described above, it is possible to provide a data transmission device, a data collection device, a wireless system, a method of controlling a data transmission device, a data collection method, and a program that, when the data collection device communicates with a wireless communicator, facilitate the identification of the wireless communicator.

### [Description of Embodiments of Present Disclosure]

In the following description and drawings, the same reference numerals are assigned to identical components. Therefore, detailed descriptions of these components are not repeated. Note that at least some portions of the embodiments described below may be optionally combined.

(1) A data transmission device according to a first aspect of the present disclosure is a data transmission device with a wireless communication unit, including: a non-volatile memory configured to store an identifier uniquely assigned to the data transmission device, the non-volatile memory being configured to be capable of further storing a name assigned to the data transmission device; an advertising unit configured to incorporate the identifier in advertisement data and broadcast the advertisement data including the identifier via the wireless communication unit, wherein, in a case where the name is stored in the non-volatile memory, the advertising unit is configured to incorporate the name, in addition to the identifier, in the advertisement data and broadcast the advertisement data; and a communication control unit configured to initiate data transmission using the wireless communication unit to a data collection device serving as a data transmission destination in response to receiving a connection request specifying the identifier from the data collection device. With this configuration, a device that receives data from the data transmission device can identify the data transmission device not only by an identifier but also by a name of the data transmission device. The name can be defined in a way that is easy for humans to understand. As a result, when the data collection device communicates with a data transmitter, the data transmitter can be easily identified.
(2) In (1) described above, the data transmission device may further include a name storage unit configured to, after data transmission using the wireless communication unit to the data collection device is initiated, in response to a configuration information setting request including a name to be assigned to the data transmission device, store the name in the non-volatile memory. With this configuration, the name remains even after the data transmission device is powered off, and the name can be transmitted, along with the identifier of the data transmission device, to a device on the receiving side when the data transmission device is powered on the next time. As a result, when the data collection device communicates with a data transmitter, the data transmitter can be easily identified.
(3) In (1) or (2) described above, of data transmitted by the communication control unit to the data collection device, data other than the advertisement data does not include the name stored in the non-volatile memory. With this configuration, it is possible to prevent an increase in the amount of data when the data transmission device actually transmits data.
(4) A data collection device according to a second aspect of the present disclosure includes: a wireless communication unit; a display device; a name storage unit configured to store an identifier and a name of one or more data transmission devices; and a name display unit configured to, in response to receiving an identifier of each data transmission device from a data transmission device capable of communicating with the wireless communication unit, read the name stored in the name storage unit in association with the received identifier from the name storage unit, display the name on the display device, and allow a user to make a selection, the wireless communication unit being configured to execute communication with a data transmission device that has an identifier corresponding to the name selected by the name display unit. With this configuration, when the data collection device receives data from the data transmission device, the data transmission device can be identified not only by an identifier but also by a name of the data transmission device. The name can be defined in a way that is easy for humans to understand. As a result, when the data collection device communicates with a data transmitter, the data transmitter can be easily identified.
(5) In (4) described above, the data collection device may further include a name addition unit configured to, in response to the advertisement data, received by the wireless communication unit from the data transmission device, including the identifier and the name, add the identifier and the name in association to the name storage unit.
(6) In (5) described above, the name addition unit may be configured to, in response to the identifier included in the advertisement data, received by the wireless communication unit from the data transmission device, not being stored in the name storage unit, add the identifier to the name storage unit. With this configuration, because the name of a data transmitter is saved even after the data collection device is powered off, when the data collection device is powered on and communicates with the data transmitter, the data transmitter can be easily identified.
(7) In (4) or (5) described above, the name display unit may include a selection unit configured to, in response to an instruction given to display a screen for selecting a communication peer, search the name storage unit for the identifier and the name of the data transmission device, and, if a corresponding name is found, display the name, and otherwise, display the received identifier, on the display device, allowing the user to make a selection. With this configuration, the user of the data collection device can identify the data transmission device to be connected not only by its identifier but also by its name. As a result, when the data collection device communicates with a data transmitter, the data transmitter can be easily identified.
(8) In (6) or (7) described above, the data collection device may further include a name change unit configured to, after communication with the data transmission device selected by the selection unit is initiated, receive an instruction from the user to change the name of the data transmission device, and store the identifier of the data transmission device and the entered name in association in the name storage unit. With this configuration, it is possible to assign a name that is easy for the user to understand to the data transmission device and to store the name in the data collection device. As a result, the user can easily identify the data transmission device.
(9) In (8) described above, the name change unit may include a name candidate display unit configured to, in response to the advertisement data received from the data transmission device including an identifier of the data transmission device but not including a name, search the name storage unit for a name associated with the identifier included in the advertisement data, and if a corresponding name is stored in the name storage unit, display the name on the display device; and, otherwise, generate a name candidate for the data transmission device, display the name candidate on the display device, and receive a change to the name or the name candidate. With this configuration, if the name of the data transmission device is stored in the data collection device, the data transmission device can be distinguished by this name from other data transmission devices. As a result, the user can easily identify the data transmission device.
(10) In (9) described above, the name candidate generated by the name candidate display unit may include a name candidate determined by sensor configuration of the data transmission device. With this configuration, each data transmission device can be identified by a name that is easy to recall based on its sensor configuration, and can be presented to the user. As a result, the user can easily identify the data transmission device.
(11) In (9) described above, the data collection device may further include a data display unit configured to perform display related to data received from the data transmission device on the display device, wherein the data display unit may include an identification information display unit configured to cause the data display unit to display the name or the identifier of the data transmission device according to whether the name corresponding to the identifier of the data transmission device is stored in the name storage unit. With this configuration, data received from each data transmission device can be confirmed along with its name. As a result, it becomes easier for the user to correctly analyze data received from the data transmission device.
(12) In (9) described above, the data transmission device may be provided in a sensor-equipped cutting tool that includes a cutting tool and a sensor configured to monitor a state of the cutting tool, and have a function to transmit data output by the sensor to the data collection device and a function to notify the data collection device of a configuration of the sensor provided in the tool; the data collection device may further include a name candidate storage unit configured to store the name candidate associated with the configuration of the sensor; and the name candidate display unit may include a name candidate search unit configured to search the name candidate storage unit based on the configuration of the sensor received from the data transmission device and display the retrieved name candidate on the display device. With this configuration, when assigning a name to each data transmission device, the name can be assigned from a unified perspective to recall the cutting tool corresponding to the sensor configuration of the data transmission device. As a result, it becomes easier for the user to correctly analyze data received from the data transmission device.
(13) In (8) described above, the data collection device may include a name transmission unit configured to, in response to a change of the name of the data transmission device by the name change unit, transmit the name after the change to the data transmission device via the wireless communication unit. With this configuration, the name of each data transmission device can be matched between the data transmission device and the data collection device.
(14) A wireless system according to a third aspect of the present disclosure is a wireless system including a data transmission device and a data collection device that can wirelessly communicate with each other, the data transmission device including: a wireless communication unit; a non-volatile memory configured to store an identifier uniquely assigned to the data transmission device, the non-volatile memory being configured to be capable of further storing a name assigned to the data transmission device; an advertising unit configured to incorporate the identifier in advertisement data and broadcast the advertisement data including the identifier via the wireless communication unit, wherein, in a case where the name is stored in the non-volatile memory, the advertising unit incorporates the name, in addition to the identifier, in the advertisement data and broadcasts the advertisement data; and a communication control unit configured to initiate data transmission using the wireless communication unit to the data collection device serving as a data transmission destination in response to receiving a connection request specifying the identifier from the data collection device, the data collection device including: a wireless communication unit; a display device; a name storage unit configured to store an identifier and a name of one or more data transmission devices; and a name display unit configured to, in response to receiving an identifier of the wireless communication unit included in each data transmission device from a data transmission device capable of communicating with the wireless communication unit of the data collection device, read the name stored in the name storage unit in association with the received identifier from the name storage unit, display the name on the display device, and allow a user to make a selection, the wireless communication unit being configured to execute communication with a data transmission device that has an identifier corresponding to the name selected by the name display unit. With this configuration, the data collection device receiving data from the data transmission device can identify the data transmission device not only by an identifier but also by a name of the data transmission device. The name can be defined in a way that is easy for humans to understand. As a result, when the data collection device communicates with a data transmitter, the data transmitter can be easily identified.
(15) A method of controlling a data transmission device according to a fourth aspect of the present disclosure is a method of controlling a data transmission device with a wireless communication unit, the data transmission device including a non-volatile memory configured to store an identifier uniquely assigned to the data transmission device, the non-volatile memory being configured to be capable of further storing a name assigned to the data transmission device, the control method including: incorporating the identifier in advertisement data and broadcasting the advertisement data including the identifier via the wireless communication unit, the broadcasting including, in a case where the name is stored in the non-volatile memory, incorporating the name, in addition to the identifier, in the advertisement data and broadcasting the advertisement data; and initiating data transmission using the wireless communication unit to a data collection device serving as a data transmission destination in response to receiving a connection request specifying the identifier from the data collection device. With this configuration, the data collection device which establishes a connection with the data transmission device can identify the data transmission device not only by an identifier but also by a name of the data transmission device. The name can be defined in a way that is easy for humans to understand. As a result, when the data collection device communicates with a data transmitter, the data transmitter can be easily identified.
(16) A data collection method according to a fifth aspect of the present disclosure is a data collection method in which a data collection device including a wireless communication unit, a display device, and a storage device collects data from one or more data transmission devices, the method including: storing, by the storage device, the identifier and the name of the one or more data transmission devices; in response to receiving, by the wireless communication unit, an identifier of each data transmission device from the one or more data transmission devices, reading the name stored in the storage device in association with the received identifier, displaying the name on the display device, and allowing a user to make a selection; and through communication of the wireless communication unit with a data transmission device that has an identifier corresponding to the name selected in the allowing a user to make a selection, collecting data from the data transmission device. With this configuration, the data collection device which establishes a connection with the data transmission device can identify the data transmission device not only by an identifier but also by a name of the data transmission device. The name can be defined in a way that is easy for humans to understand. As a result, when the data collection device communicates with a data transmitter, the data transmitter can be easily identified.
(17) A computer program according to a sixth aspect of the present disclosure is a computer program that causes a computer connected to a wireless communication unit, a display device, and a storage device to collect data from one or more data transmission devices, the computer program causing the computer to function to execute: storing an identifier and a name of the one or more data transmission devices in the storage device; in response to receiving, by the wireless communication unit, an identifier of each data transmission device from the one or more data transmission devices, reading the name stored in the storage device in association with the received identifier, displaying the name on the display device, and allowing a user to make a selection; and through communication of the wireless communication unit with a data transmission device that has an identifier corresponding to the name selected in the allowing a user to make a selection, collecting data from the data transmission device. With this configuration, the data collection device which establishes a connection with the data transmission device can identify the data transmission device not only by an identifier but also by a name of the data transmission device. The name can be defined in a way that is easy for humans to understand. As a result, when the data collection device communicates with a data transmitter, the data transmitter can be easily identified.

### [Details of Embodiments of Present Disclosure]

Specific examples of a data transmission device, a data collection device, a wireless system, a method of controlling the data transmission device, a data collection method, and a program according to embodiments of the present disclosure will be described below with reference to the drawings. It is to be noted that the present disclosure is not limited to these examples but is indicated by the claims and is intended to include all modifications within the meaning and scope equivalent to the claims.

### 1. First Embodiment

### (1) Overall Configuration

### A. Data Collection System

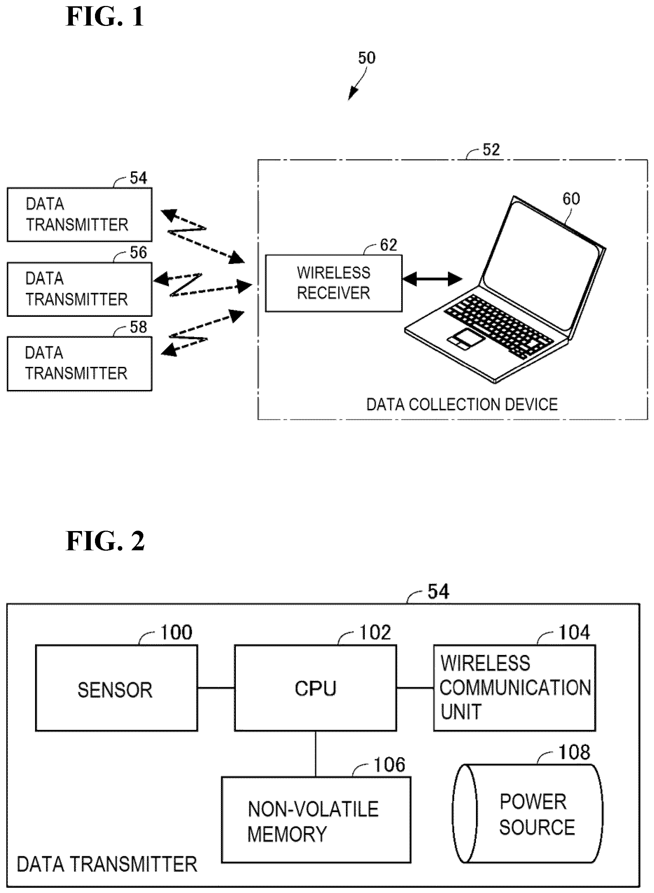

FIG. 1 illustrates the configuration of a data collection system 50 according to a first embodiment. Referring to FIG. 1, the data collection system 50 includes a data transmitter 54, a data transmitter 56, and a data transmitter 58, each provided in a cutting tool that is not illustrated, and a data collection device 52 that performs a process of collecting and displaying data from the data transmitter 54, the data transmitter 56, and the data transmitter 58.

### B. Data Transmitter

The data transmitter 56 and the data transmitter 58 have the same configuration as the data transmitter 54. Therefore, only the configuration of the data transmitter 54 will be described here.

The data collection device 52 includes a wireless receiver 62 capable of wirelessly communicating with the data transmitter 54, and a terminal 60 including a computer that executes a process of collecting and displaying sensor data from the data transmitter 54, the data transmitter 56, the data transmitter 58, and so forth via the wireless receiver 62.

Referring to FIG. 2, the data transmitter 54 includes: a sensor 100 attached to a cutting tool and including any combination of a thermal sensor that monitors the heat of the cutting tool, an acceleration sensor that monitors the acceleration of the cutting tool, a distortion sensor that monitors the distortion of the cutting tool, and so forth; a CPU 102 for establishing a connection with a data collection device which is a data transmission destination in response to receiving a connection request specifying the identifier from the data collection device, and executing communication control for performing data transmission using a wireless communication unit 104 to the data collection device; and the wireless communication unit 104 connected to the CPU 102 and capable of performing wireless communication with the wireless receiver 62 illustrated in FIG. 1. The wireless communication unit 104, under control by the CPU 102, performs processes such as a process of receiving sensor data from the CPU 102 and transmitting it to the wireless receiver 62, and a process of giving data and instructions received from the terminal 60 via the wireless receiver 62 to the CPU 102.

The data transmitter 54 further includes a non-volatile memory 106 that stores an identifier of the data transmitter 54 and a name assigned to the data transmitter 54, and a power source 108 that supplies power to the sensor 100, the CPU 102, the wireless communication unit 104, the non-volatile memory 106, and the like. In the present embodiment, the power source 108 is a battery.

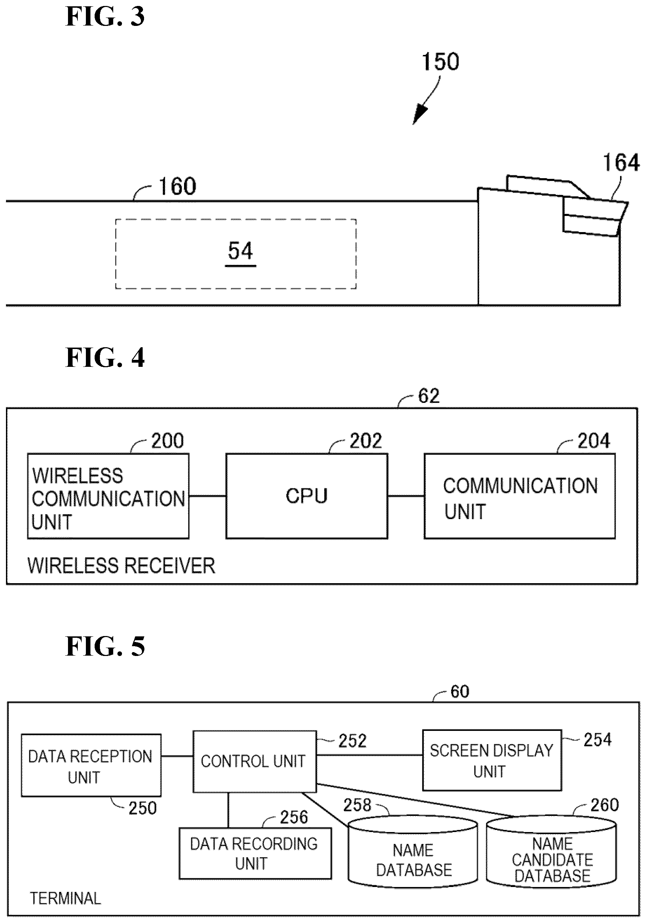

FIG. 3 illustrates a schematic shape of a cutting tool 150 equipped with the data transmitter 54. Referring to FIG. 3, the cutting tool 150 includes a holder 160 having a slightly flat rectangular cross-section and holding a cutting insert 164 at its end. The data transmitter 54 is provided inside the holder 160, and each sensor included in the sensor 100 of the data transmitter 54 is attached to an appropriate position of the holder 160.

### C. Wireless Receiver

Referring to FIG. 4, the wireless receiver 62 includes a wireless communication unit 200 capable of wirelessly communicating with the wireless communication unit 104 illustrated in FIG. 2, a CPU 202 connected to the wireless communication unit 200, and a communication unit 204 connected to the CPU 202. The communication unit 204 may be either wireless or wired, but in the present embodiment, the communication unit 204 is for wired communication and is connected to the terminal 60 via a cable which is not illustrated.

### D. Terminal

Referring to FIG. 5, the terminal 60 includes a data reception unit 250 for wired communication with the communication unit 204 illustrated in FIG. 4, a control unit 252 connected to the data reception unit 250, and a screen display unit 254 controlled by the control unit 252 to display information on a display device.

The terminal 60 further includes a data recording unit 256, connected to the control unit 252, for recording sensor data and the like received via the data reception unit 250, a name database 258 for storing names assigned to the individual data transmitters in association with the identifiers of the data transmitters, and a name candidate database 260 that stores in advance name candidates for the data transmitters according to sensor configurations provided in the data transmitters, as will be described later. The control unit 252, as will be described later, when assigning a name to a data transmitter that has not yet been named, reads a name candidate corresponding to the configuration of sensors provided in the data transmitter from the name candidate database 260, and causes the screen display unit 254 to display it as a name candidate.

### E. Sequence Upon Connection

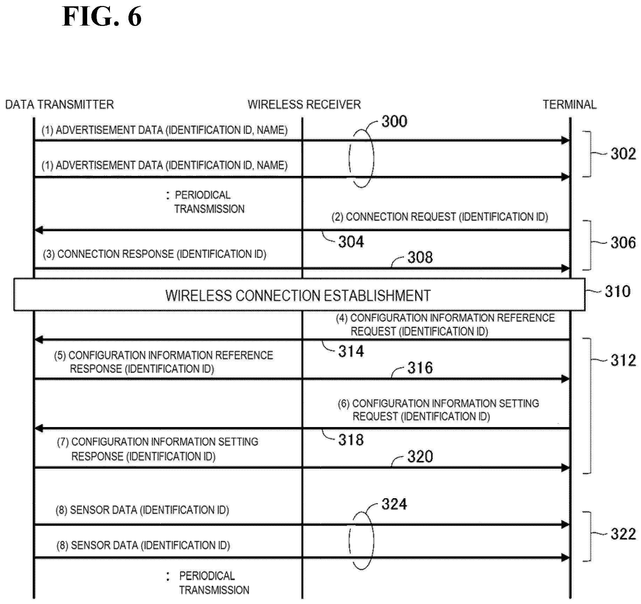

FIG. 6 illustrates a sequence diagram when the data collection device 52 connects to any data transmitter (e.g., data transmitter 54). Referring to FIG. 6, data transmitters, such as the data transmitter 54 and the like, repeat broadcasting advertisement data 300 periodically when they are not yet connected to another data collection device.

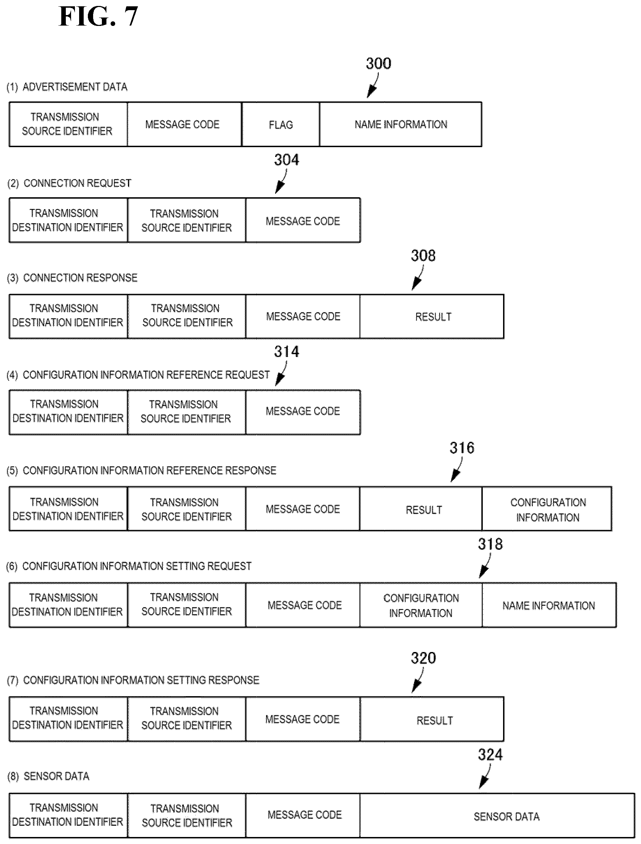

Referring to FIG. 7 (1), the advertisement data 300 includes the identifier of the data transmitter 54, a message code indicating that it is advertisement data, a flag indicating whether the name information of the data transmitter 54 is included in the advertisement data 300, and the name information. In the present embodiment, if the flag is 1, the advertisement data 300 includes the name information, and if the flag is 0, the advertisement data 300 does not include the name information.

Referring to FIG. 6, when the terminal 60 receives the advertisement data 300 via the wireless receiver 62, if the flag is 1 and the name of the data transmitter 54 is not stored in the terminal 60 along with its identifier, the terminal 60 executes a name saving process 302 to save the name information in the name database 258 (FIG. 5) in association with the identifier, as will be described later.

When connecting to a specific data transmitter (e.g., data transmitter 54) from the terminal 60, the terminal 60 executes a connection request process 306 to transmit a connection request 304 specifying the identifier of the data transmitter 54, as illustrated in FIG. 6. FIG. 7 (2) illustrates the configuration of the connection request 304. As illustrated in FIG. 7 (2), the connection request 304 includes the identifier of the data transmitter 54 as a transmission destination identifier, the identifier of the wireless receiver 62 as a transmission source identifier, and a message code indicating that it is a connection request.

Referring back to FIG. 6, when the data transmitter 54 receives this connection request 304, the data transmitter 54 returns a connection response 308 to the terminal 60, indicating whether the connection is possible. FIG. 7 (3) illustrates the configuration of the connection response 308.

Referring to FIG. 7 (3), the connection response 308 includes the identifier of the wireless receiver 62 as a transmission destination identifier, the identifier of the data transmitter 54 as a transmission source identifier, a message code indicating that it is a connection response, and a result indicating whether the connection is possible. In FIGs. 7 (4), 7 (5), (6), 7 (7), and 7 (8) below, as illustrated in FIGs. 7 (1) and 7 (2), the transmission destination identifier indicates the identifier of the wireless receiver at the data transmission destination, and the transmission source identifier indicates the identifier of the wireless receiver at the data transmission source. Therefore, in the description related to these figures, the description of these identifiers will not be repeated.

Referring back to FIG. 6, having received this connection response 308, the terminal 60 determines, based on the result, either a process of initiating communication with the data transmitter 54 or a process of canceling communication with the data transmitter 54. In the following description, it is assumed that communication between the data transmitter 54 and the terminal 60 is possible, and a wireless connection establishment 310 has occurred between the two.

Thereafter, the terminal 60 performs a name setting process 312 to set the name of the data transmitter 54. Specifically, the terminal 60 first transmits a configuration information reference request 314 to the data transmitter 54, requesting transmission of the sensor configuration information of the data transmitter 54. The configuration of the configuration information reference request 314 is illustrated in FIG. 7 (4).

The configuration of a configuration information reference response 316, which the data transmitter 54 replies to the terminal 60 in response to the configuration information reference request 314, is illustrated in FIG. 7 (5). The configuration information reference response 316 includes a message code indicating that it is configuration information, a result indicating whether the configuration information can be transmitted, and configuration information related to the configuration of the sensor 100, the sampling rate, and the like when the configuration information can be transmitted.

In response to the configuration information reference response 316, the terminal 60 displays the configuration information of the data transmitter 54 via the screen display unit 254. At this time, if the name of the data transmitter 54 is stored in the name database 258, the terminal 60 displays that name. If the name of the data transmitter 54 is not stored in the name database 258, the terminal 60 searches the name candidate database 260 based on the sensor configuration, and reads and displays a name candidate according to the sensor configuration. If there is no name candidate in the name candidate database 260, the terminal 60 displays the identifier of the data transmitter 54.

In the name setting process 312, when the user changes (sets) the name of the data transmitter 54 or changes the sensor configuration (e.g., sampling rate), the terminal 60 transmits a sensor configuration information setting request 318 to the data transmitter 54. In response to this configuration information setting request 318, the data transmitter 54 updates the configuration information, and returns the result as a configuration information setting response 320 to the terminal 60. The configuration of the configuration information setting request 318 is illustrated in FIG. 7 (6), and the configuration of the configuration information setting response 320 is illustrated in FIG. 7 (7). In FIG. 7 (6), the configuration information indicates the setting information related to the sensor configuration, and the name information indicates the name to be assigned to the data transmitter 54. In FIG. 7 (7), "result" indicates whether the setting of the configuration information has been successful.

Note that a process of setting the name to the data transmitter 54 will be described in detail later.

Thus, once the configuration information has been set, the process of transmitting sensor data 324 from the data transmitter 54 to the terminal 60 is executed periodically, as illustrated in FIG. 6. FIG. 7 (8) illustrates the configuration of the sensor data 324. In FIG. 7 (8), the transmission destination identifier is the identifier of the wireless receiver 62, and the transmission source identifier is the identifier of the wireless receiver 62. Having received the sensor data 324, the terminal 60 executes a data process 322.

### F. Screen Transition

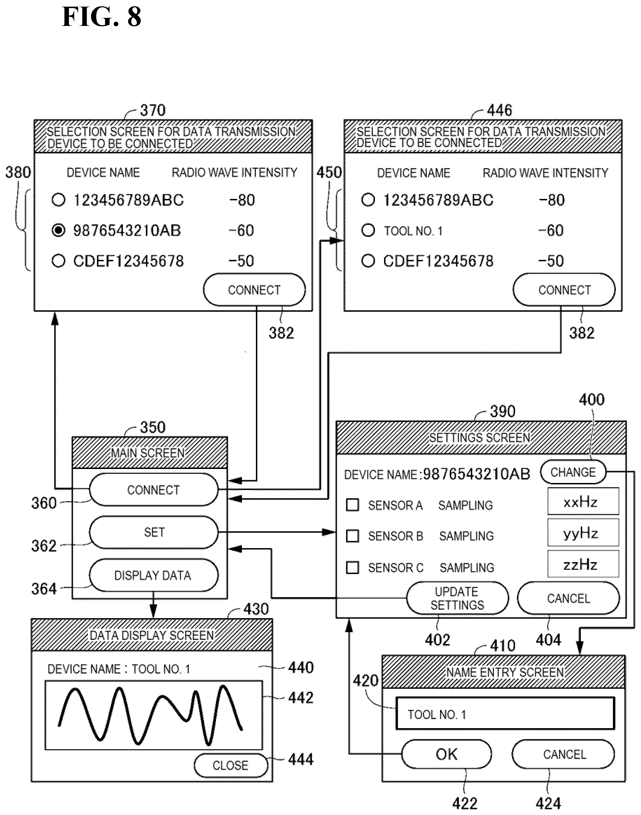

FIG. 8 illustrates the transition of screens displayed by the screen display unit 254 of the terminal 60. Referring to FIG. 8, screens displayed by the terminal 60 include a main screen 350, which is the initial screen. The main screen 350 displays a connection button 360 operated by the user when selecting a device to connect, a setting button 362 operated by the user when setting the configuration information of the peer data transmitter with which the connection has been established, and a data display button 364 operated by the user when displaying sensor data and the like transmitted from the data transmitter.

The screens displayed by the terminal 60 further include a device-to-be-connected selection screen 370 (the same as a selection screen 446) displayed when the connection button 360 is operated, a settings screen 390 displayed when the setting button 362 is operated, and a data display screen 430 displayed when the data display button 364 is operated. The settings screen 390 displays a change button 400 operated by the user for changing the name of the device at the connection destination, and a cancel button 404 operated by the user for canceling the change of the name. When the change button 400 is pressed, the screen transitions to a name entry screen 410 where the name of the device at the connection destination is entered. When the cancel button 404 is pressed, the screen transitions to the main screen 350.

The device-to-be-connected selection screen 370 displays the identifier of each device included in advertisement data received by the terminal 60, along with its radio wave intensity. If some of the devices have already been named, the names set to these devices are displayed, rather than their identifiers, as illustrated in the selection screen 446. Radio buttons 380 are displayed on the left side of the devices. When a device at the connection destination is selected using a corresponding one of the radio buttons 380 and then a connection button 382 is pressed, a connection is established between the wireless receiver 62 and the corresponding data transmission device, such as the data transmitter 54, and the terminal 60 becomes able to communicate with the data transmitter 54. As illustrated in the selection screen 446, even when the name, rather than the identifier, of a device at the connection destination is displayed, selecting the device using a radio button 450 and pressing the connection button 382 will similarly allow communication with the data transmitter corresponding to that name.

When the setting button 362 on the main screen 350 is pressed, the settings screen 390 is displayed. The settings screen 390 displays, based on configuration information received from the data transmitter (e.g., data transmitter 54) connected to the terminal 60, the configuration information of the data transmitter 54. The settings screen 390 further displays the change button 400 and a settings update button 402. When the user wants to change the device name, pressing the change button 400 displays the name entry screen 410, allowing the user to set the name of the peer device.

The name entry screen 410 displays a name entry field 420, an OK button 422, and a cancel button 424. When the selected data transmitter has already been named, the name entry field 420 displays that name; otherwise, the name entry field 420 displays a name candidate selected according to configuration information indicating the sensor configuration of the peer device. When the OK button 422 is pressed while a name has been entered in the name entry field 420, the name entered on the name entry screen 410 is stored, and the screen returns to the settings screen 390. When the cancel button 424 is pressed, the name of the peer device is not stored, and the screen returns to the settings screen 390. Note that, when the selected data transmitter has not been named, the identifier of the data transmitter, instead of a name candidate, may be displayed in the name entry field 420.

When the settings update button 402 is pressed on the settings screen 390, the sensor configuration entered on the settings screen 390 and the set name (if it has been set on the name entry screen 410) are transmitted to the data transmitter, and information held by the data transmitter is updated with that information. That is, the configuration information setting request 318 in FIG. 6 is transmitted to the data transmitter, and, if the request 318 includes the name of the data transmitter, that name is written to a non-volatile memory in the data transmitter. Control then returns to the main screen 350.

When the data display button 364 is pressed on the main screen 350, the screen transitions to the data display screen 430. On the data display screen 430, information such as the graph of the sensor data received from the data transmitter is displayed in a data display field 442. At this time, if there is a name entered on the name entry screen 410 and transmitted to the data transmitter, this name is displayed in a sensor name field 440 at the top of the data display screen 430. If the data transmitter has not been named, the sensor name field 440 displays a name candidate selected according to configuration information indicating the sensor configuration of the data transmitter. Instead of the name candidate, the identifier of the data transmitter may be displayed.

### G. Program Configuration

### G1. Main Screen 350

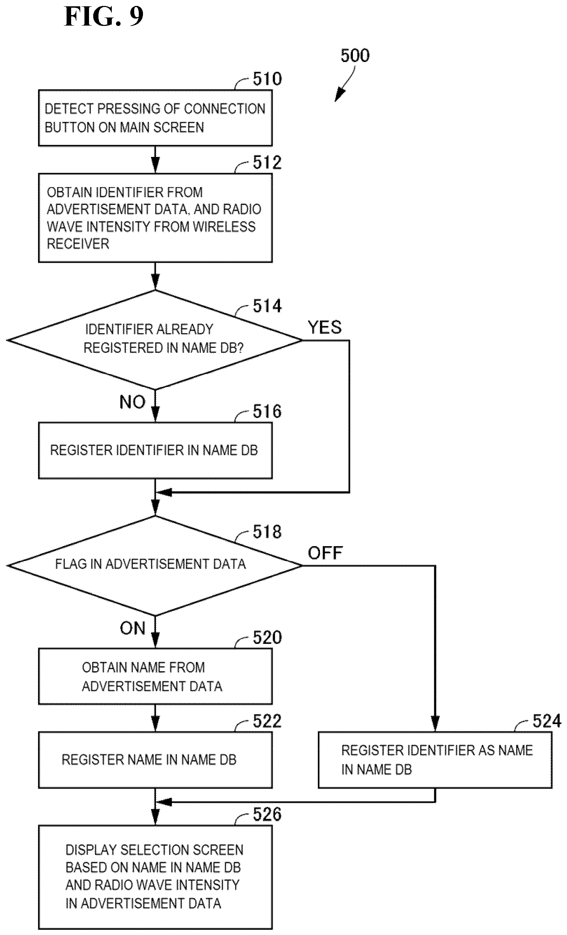

FIG. 9 illustrates the control structure of a program executed by the terminal 60 when the connection button 360 is pressed on the main screen 350 in FIG. 8. Referring to FIG. 9, a program 500 here includes: step 510 of detecting the pressing of the connection button 360 on the main screen 350 and initiating the execution of the program; and step 512 of receiving advertisement data, and obtaining the identifier of each data transmitter from each received item of advertisement data, and the radio wave intensity from the wireless receiver 62. The program 500 further includes: step 514 of determining whether each obtained identifier has already been registered in the name database 258 (see FIG. 5); and step 516 of registering that identifier in the name database 258 when the determination in step 514 is negative. If the identifier has already been registered in the name database 258, the program 500 does nothing.

The program 500 further includes: step 518 of causing the flow of control to branch according to whether a flag indicating whether the advertisement data includes name information is on or off; step 520 of obtaining a name from the name information in the advertisement data when the flag is on; and step 522 of, following step 520, registering the name in association with the identifier of the advertisement data in the name database 258 illustrated in FIG. 5. The program 500 further includes: step 524 of registering the identifier of the advertisement data as a name in the name database 258 when the flag is determined to be off in step 518; and step 526 of, after the completion of step 522 or step 524, generating and displaying, from each record registered in the name database 258 (FIG. 5), the device-to-be-connected selection screen 370 based on the name of the data transmitter and the radio intensity obtained from the wireless receiver 62, and terminating the execution of the program 500.

### G2. Selection Screen 370

A program executed when the connection button 382 is pressed on the device-to-be-connected selection screen 370 has the following structure. Note that, before pressing the connection button 382, it is necessary to select the device at the connection destination using the radio button 380.

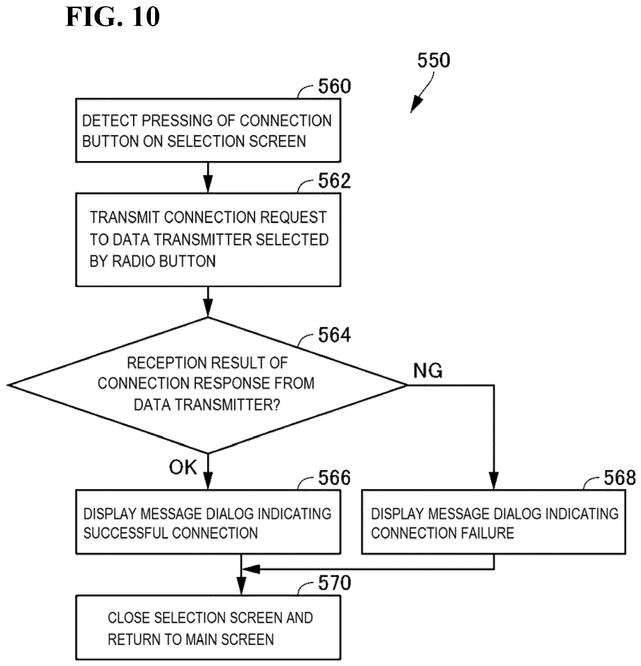

Referring to FIG. 10, a program 550 here includes: step 560 of detecting the pressing of the connection button 382 on the selection screen 370 and initiating execution; and step 562 of transmitting the connection request 304 illustrated in FIG. 7 (2) to the data transmitter selected by the radio button 380. The program 550 further includes: step 564 of receiving the connection response 308 (see FIG. 7 (3)) from the data transmitter and causing the flow of control to branch according to the result of a connection included in the connection response 308; step 566 of displaying a message dialog indicating a successful connection when the result in step 564 is OK; and step 568 of displaying a message dialog indicating a connection failure when the result in step 564 is not OK. The program 550 further includes: step 570 of, after completion of step 566 or step 568, closing the selection screen 370, displaying the main screen 350, and terminating the execution of the program 550.

### G3. Settings Screen 390

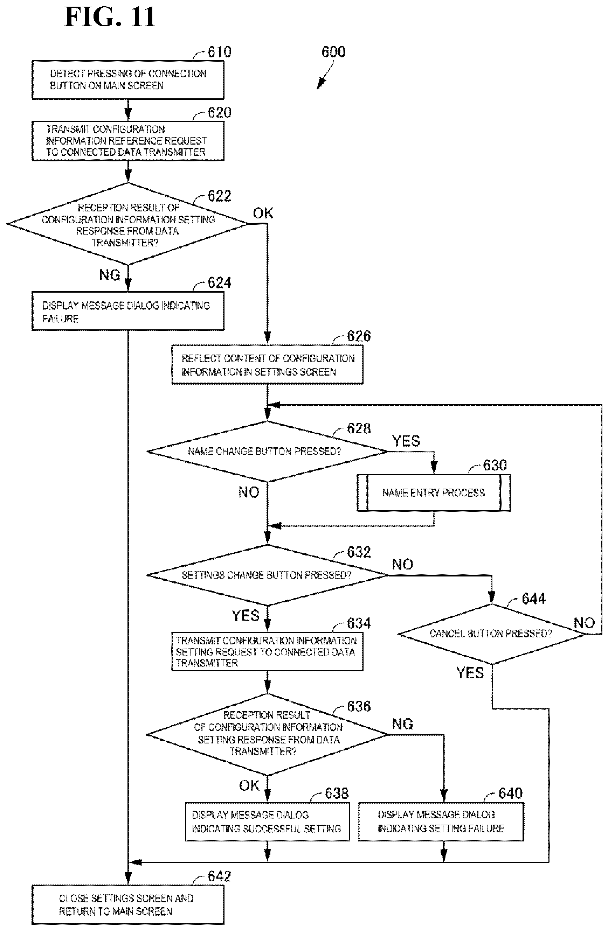

FIG. 11 illustrates the control structure of a program executed by the connection button 360 when the setting button 362 is pressed on the main screen 350 illustrated in FIG. 8. Referring to FIG. 11, a program 600 here includes: step 610 of detecting the pressing of the setting button 362 on the main screen 350 and initiating execution; step 620 of transmitting the configuration information reference request 314 illustrated in FIG. 7 (4) to the data transmitter that is currently connected; and step 622 of causing the flow of control to branch according to whether the value of the result field in the configuration information reference response 316 (see FIG. 7 (5)) received from the data transmitter in response to the configuration information reference request 314 is OK.

The program 600 further includes: step 624 of displaying a message dialog indicating a connection failure when the determination in step 622 is negative, that is, when the data transmitter, which is the communication peer, is unable to communicate with the terminal 60; and step 642 of closing the settings screen 390, terminating the execution of the program 600, and returning to the main screen 350.

The program 600 also includes: step 626 of causing the settings screen 390 to reflect the content of the configuration information received from the data transmitter when the determination in step 622 is affirmative; step 628 of causing the flow of control to branch according to whether the user has pressed the change button 400; and step 630 of, when the determination in step 628 is affirmative, causing the screen to transition to the name entry screen 410 illustrated in FIG. 8 and executing a name entry process. The program 600 further includes: step 632 of, when the determination in step 628 is negative, and when the determination in step 628 is affirmative and the execution of step 630 has been completed, causing the flow of control to branch according to whether the settings update button 402 has been pressed on the settings screen 390 illustrated in FIG. 8. This program further includes: step 644 of, when the determination in step 632 is negative, causing the flow of control to branch according to whether the user has pressed the cancel button 404. When the determination in step 644 is affirmative, control proceeds to step 642; and when it is negative, control proceeds to step 628. That is, step 628, step 632, and step 644 make it possible to execute step 630 until the user presses either the settings update button 402 or the cancel button 404.

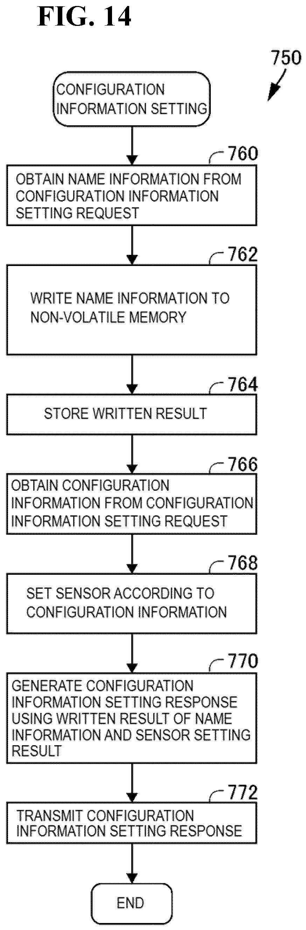

The program 600 further includes: step 634 of transmitting the configuration information setting request 318 (see FIG. 7 (6)) to the data transmitter that is currently connected in response to the determination in step 632 being affirmative; and step 636 of causing the flow of control to branch according to whether the result of the setting process of configuration information included in the configuration information setting response 320 (see FIG. 7 (7)), transmitted from the data transmitter in response to the configuration information setting request 318, is OK. A program executed by the CPU 102 when the data transmitter 54 illustrated in FIG. 2 receives the configuration information setting request 318 will be described later with reference to FIG. 14.

The program 600 further includes: step 638 of displaying a message dialog indicating a successful setting in response to the determination in step 636 being affirmative (OK); and step 640 of displaying a message dialog indicating a setting failure in response to the determination in step 636 being negative (NG). After the execution of either step 638 or step 640, control proceeds to step 642, where a process to close the settings screen 390, terminate the execution of the program 600, and return to the main screen 350 is performed.

### G4. Name Entry Screen 410

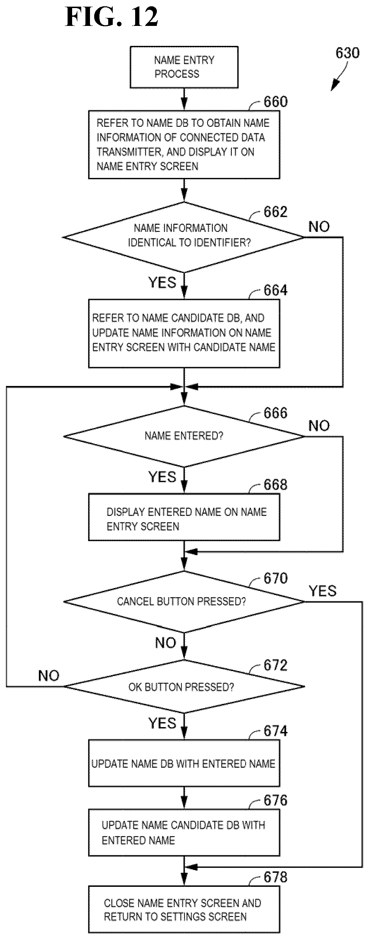

Referring to FIG. 12, a program executed in step 630 in FIG. 11 includes: step 660 of searching the name database 258 illustrated in FIG. 5 using the identifier of the data transmitter that is currently connected as a key to obtain name information stored, and displaying it in the name entry field 420 of the name entry screen 410 illustrated in FIG. 8; and step 662 of causing the flow of control to branch according to whether the name information obtained in step 660 is identical to the identifier of the data transmitter that is currently connected. This program further includes: step 664 of, when the determination in step 662 is affirmative, referring to the name candidate database 260 illustrated in FIG. 5 based on the sensor configuration information of the data transmitter that is currently connected to read a name candidate corresponding to the sensor configuration, and updating the name displayed in the name entry field 420 illustrated in FIG. 8 with the name candidate. Step 630 further includes: step 666 of, after completion of step 664 or when the determination in step 662 is negative, causing the flow of control to branch according to whether the user has entered the name; step 668 of, when the determination in step 666 is affirmative, displaying the entered name in the name entry field 420; and step 670 of, after step 668 or when the determination in step 666 is negative, causing the flow of control to branch according to whether the cancel button 424 on the name entry screen 410 illustrated in FIG. 8 has been pressed. When it is determined in step 670 that the cancel button 424 has been pressed, control proceeds to step 678, where the name entry screen 410 is closed. Thereafter, the control returns to the settings screen 390.

Step 630 further includes: step 672 of, in response to the determination in step 670 being negative, causing the flow of control to branch according to whether the OK button 422 in FIG. 8 has been pressed. When it is determined in step 672 that the OK button 422 has not been pressed, control returns to step 666. Step 630 further includes: step 674 of, in response to the determination in step 672 that the OK button 422 has been pressed, updating the name of a record having the identifier of the data transmitter in communication using the name entered in the name entry field 420 in the name database 258 (see FIG. 5); and step 676 of updating the name candidate of a record according to the sensor configuration in the configuration information received from the data transmitter in communication using the name entered in the name entry field 420 in the name candidate database 260, like the name database 258. When step 676 is completed, control proceeds to step 678, where the name entry screen 410 is closed. Thereafter, the control returns to the settings screen 390.

### G5. Data Display Screen 430

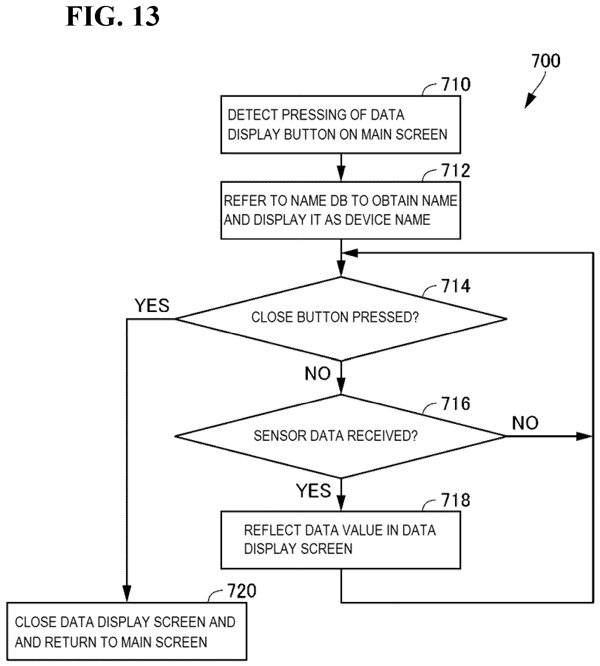

The control structure of a program executed when the data display button 364 is pressed on the main screen 350 in FIG. 8 will be described with reference to FIG. 13. Referring to FIG. 13, a program 700 here includes: step 710 of detecting the pressing of the data display button 364 on the main screen 350 and activating the program; and step 712 of displaying the data display screen 430, accessing the name database 258 using the identifier of the data transmitter that is currently connected as a key to obtain a name, and displaying the name in the sensor name field 440. The program 700 further includes: step 714 of causing the flow of control to branch according to whether a "close" button 444 has been pressed. When it is determined in step 714 that the "close" button 444 has been pressed, control proceeds to step 720. In step 720, the program 700 closes the data display screen 430, and causes control to return to the main screen 350.

The program 700 further includes: step 716 of, in response to the determination in step 714 being negative, causing the flow of control to branch according to whether sensor data has been received from the data transmitter in communication; and step 718 of, when the determination in step 716 is affirmative, causing the data display field 442 of the data display screen 430 to reflect the received data value and causing control to return to step 714. When the determination in step 716 is negative, control also returns to step 714.

### G6. Processing at Data Transmitter 54 Receiving Configuration Information Setting Request 318

A program executed by the CPU 102 in the data transmitter 54 illustrated in FIG. 2 in response to receiving the configuration information setting request 318 illustrated in FIG. 7 (6) will be described with reference to FIG. 14.

A program 750 here includes: step 760 of obtaining name information from the received configuration information setting request 318; and step 762 of writing the name information, obtained in step 760, to the non-volatile memory 106 illustrated in FIG. 2. Note that the identifier of the data transmitter 54 is written in advance in the non-volatile memory 106. This program further includes: step 764 of storing the result of processing in step 762 (success or failure) in a storage unit that is not illustrated. Although this processing does not fail normally, it may fail when the name includes unusable characters or when the storage capacity of the non-volatile memory 106 is insufficient.

The program 750 further includes: step 766 of obtaining sensor configuration information from the configuration information setting request 318; step 768 of setting the sensor operating conditions according to the configuration information obtained in step 766; step 770 of generating the configuration information setting response 320 illustrated in FIG. 7 (7) using information indicating the written result of the name information, stored in step 764, and the result of processing in step 768 (success or failure); and step 772 of transmitting the configuration information setting response 320 generated in step 770 to the terminal 60.

### (2) Operation

The data collection system 50 configured as described above operates as follows.

Referring to FIG. 8, the main screen 350 is displayed on the screen of the terminal 60. When the user presses the connection button 360, the terminal 60 obtains the transmission source identifier from the advertisement data 300 of each data transmitter, and the radio wave intensity from the wireless receiver 62 (step 512 in FIG. 9). If each obtained identifier is not registered in the name database 258 (see FIG. 5), the terminal 60 registers the identifier of the received advertisement data 300 in the name database 258 (step 516 in FIG. 9).

If name information is attached to the advertisement data 300 (ON in step 518), the terminal 60 further registers that name in association with the identifier of the advertisement data in the name database 258 illustrated in FIG. 5 (step 522). If no name information is attached to the advertisement data 300, the terminal 60 registers the identifier of the advertisement data as a name, in association with the identifier itself, in the name database 258 (step 524). Thereafter, the terminal 60, using information related to a data transmitter to be connected, displays these items of information on the selection screen 370.

At this time, if the name of the data transmitter is not recorded in the name database 258, the terminal 60 displays the identifier instead of the name. In the example of the selection screen 370 illustrated in FIG. 8, for each data transmitter, an identifier is displayed, while a name is not displayed.

It is assumed that, on the selection screen 370, the user has selected the peer data transmitter to connect to and pressed the connection button 382. The terminal 60 transmits the connection request 304 illustrated in FIG. 7 (2) to the selected data transmitter (step 562 in FIG. 10) and receives the connection response 308 (see FIG. 7 (3)) from the data transmitter. When the value of "result" included in the connection response 308 is OK, it means that communication between the terminal 60, the selected data transmitter, and the terminal 60 has been established. The screen returns to the main screen 350 (step 570).

After the connection between the terminal 60 and the data transmitter has been established, when the user presses the setting button 362 on the main screen 350, the following process is performed. Referring to FIG. 11, the terminal 60 transmits the configuration information reference request 314 illustrated in FIG. 7 (4) to the data transmitter that is currently connected (step 620). Then, the configuration information reference response 316 (see FIG. 7 (5)) is transmitted from the data transmitter. Normally, the configuration information reference response 316 contains the configuration information of the data transmitter. The terminal 60 causes the settings screen 390 to reflect the content of the configuration information received from the data transmitter (step 626). At this time, since the name of the data transmitter is not saved in the name database 258, its identifier is displayed as the device name of the data transmitter.

It is not easy to determine the type of cutting tool in which the data transmitter is provided, based only on its identifier. Therefore, the user presses the change button 400. Then, the terminal 60 causes the screen to transition to the name entry screen 410 illustrated in FIG. 8, where a name entry process is executed (step 630). Furthermore, when the OK button 422 is pressed on the name entry screen, the screen again displays the settings screen 390. At this time, the device name displayed on the settings screen 390 has been changed to the device name entered on the name entry screen 410. If there is any information to be updated as part of the sensor configuration, the user enters that information on this settings screen 390.

When the user presses the settings update button 402 on the settings screen 390, the terminal 60 transmits the configuration information setting request 318 (see FIG. 7 (6)) to the data transmitter that is currently connected (step 634 in FIG. 11). The data transmitter, which is the communication peer, obtains name information from the configuration information setting request 318, and stores the name information along with its identifier in the non-volatile memory 106 illustrated in FIG. 2. In response to this update being successful, the data transmitter transmits the configuration information setting response 320 illustrated in FIG. 7 (5) to the terminal 60.

Thereafter, transmission of the sensor data from the data transmitter to the terminal 60 begins. When the user presses the data display button 364 on the main screen 350, the data display screen 430 is displayed. In the sensor name field 440 of the data display screen 430, the name of the data transmitter, which is the peer device, is displayed, not its identifier. Therefore, the user can easily and reliably determine from what type of cutting tool the data displayed on the screen has been collected.

Thereafter, name information is attached to the advertisement data 300 (see FIG. 7 (1)), transmitted from this data transmitter, and its flag is set to 1. Therefore, the next time the terminal 60 makes a connection with this data transmitter, the name of the data transmitter 54 can be extracted from the advertisement data 300, which is from the data transmitter 54. As a result, the selection screen displayed by the terminal 60 displays not only the identifier as in the selection screen 370 in FIG. 8, but also the name in place of the identifier for a data transmitter that has a name set, as in the selection screen 446. Since the name of the data transmitter is displayed in this way, it becomes easier to identify the data transmitter to connect to, reducing the risk of connecting the terminal 60 to the wrong data transmitter.

According to the present embodiment, as described above, when transmitting the output of a sensor, which is provided on a cutting tool and monitors the state of the cutting tool, to the data collection device via wireless communication, the possibility of incorrect connection, where the terminal performing data processing in the data collection device mistakenly connects to a data transmitter different from the intended data transmitter, can be reduced. It is possible to prevent power consumption involved in communication with the wrong data transmitter. In addition, the name of the data transmitter is used during the establishment of a connection between the data transmitter and the terminal 60, but only the identifier is used during the communication of sensor data. As a result, it is possible to reduce the amount of data during the communication of sensor data, thereby reducing the power consumption of the data transmitter.

### 3. Modifications

In the above-described embodiments, the data collection device 52 includes the terminal 60 and the wireless receiver 62, which is separate from the terminal 60. However, the present disclosure is not limited to such embodiments. If the terminal 60 has wireless communication functionality, it can also function as the wireless receiver 62. Additionally, in the above-described embodiments, the wireless receiver 62 and the terminal 60 have a one-to-one correspondence in the data collection device 52. However, the present disclosure is not limited to such embodiments. The data collection device 52 may include multiple terminals 60, and these terminals 60 may collect sensor data from data transmitters via the same wireless receiver 62. Multiple wireless receivers 62 and multiple terminals 60 may be networked so that each terminal 60 collects sensor data from a different data transmitter. Furthermore, in the above-described embodiments, the wireless receiver 62 and the terminal 60 are connected by a wired connection. However, the present disclosure is not limited to such embodiments. The connection between the wireless receiver 62 and the terminal 60 may be a wireless connection; or they may be connected via a wired or wireless network, and either a wired or wireless connection may be used between the wireless receiver 62, the terminal 60, and the network.

Furthermore, in the above-described embodiments, the main screen 350 is displayed when the connection button 382 is pressed on the selection screen 370 illustrated in FIG. 8. Additionally, the settings screen 390 is displayed when the setting button 362 is pressed on the main screen 350. Furthermore, the name entry screen 410 is displayed when the change button 400 is pressed on the settings screen 390. However, the present disclosure is not limited to such embodiments. For example, a setting button instead of the connection button 382 may be provided on the selection screen 370. When the setting button is pressed, a connection may be established with the data transmitter selected by the radio button 380. Promptly, the name entry screen 410 may be displayed, or the name entry screen 410 may be displayed via the settings screen 390.

Each process (each function) in the above-described embodiments is implemented by a processing circuit (Circuitry) including one or more processors. The processing circuit may be configured as an integrated circuit that combines one or more processors mentioned above with one or more memories, various analog circuits, and various digital circuits. The one or more memories store a program (instructions) that causes the one or more processors to execute each process mentioned above. The one or more processors may execute each process mentioned above in accordance with the program read from the one or more memories, or may execute each process mentioned above in accordance with logic circuitry designed in advance to execute each process mentioned above. The processors may be various processors suitable for computer control, such as a CPU, GPU (Graphics Processing Unit), DSP (Digital Signal Processor), FPGA (Field-Programmable Gate Array), or ASIC (Application Specific Integrated Circuit). The processors that are physically separate may cooperate with each other to execute each process mentioned above. For example, the processors installed in multiple physically separate computers may cooperate with each other to execute each process mentioned above via a network such as a LAN (Local Area Network), WAN (Wide Area Network), or the Internet. The program may be installed in the memories via the network from an external server device or the like. Alternatively, it may be distributed stored on a recording medium such as a CD-ROM (Compact Disc Read-Only Memory), DVD (Digital Versatile Disc)-ROM, or semiconductor memory, and installed in the memories from the recording medium.

### [Supplementary Notes]

[Supplementary Note 1] A non-transitory storage medium according to an aspect of the present disclosure is a computer-readable, non-transitory storage medium that stores a computer program for causing a computer, which is connected to a wireless communication unit, a display device, and a storage device, to collect data from one or more data transmission devices, the computer program causing the computer to function to execute: storing an identifier and a name of the one or more data transmission devices in the storage device; in response to receiving, by the wireless communication unit, an identifier of each data transmission device from the one or more data transmission devices, reading the name stored in the storage device in association with the received identifier, displaying the name on the display device, and allowing a user to make a selection; and through communication of the wireless communication unit with a data transmission device that has an identifier corresponding to the name selected in the allowing a user to make a selection, collecting data from the data transmission device.

The embodiments disclosed herein are to be considered illustrative in all respects and are not limiting. The scope of the present disclosure is not indicated by the detailed description of the disclosure, but is indicated by each claim of the claims, and it is intended to include all modifications within the meaning and scope equivalent to the language of the claims.

### REFERENCE SIGNS LIST

50 data collection system
52 data collection device
54, 56, 58 data transmitters
60 terminal
62 wireless receiver
100 sensor
102, 202 CPUs
104, 200 wireless communication units
106 non-volatile memory
108 power source
150 cutting tool
160 holder
164 cutting insert
204 communication unit
250 data reception unit
252 control unit
254 screen display unit
256 data recording unit
258 name database
260 name candidate database
300 advertisement data
302 name saving process
304 connection request
306 connection request process
308 connection response
310 wireless connection establishment
312 name setting process
314 configuration information reference request
316 configuration information reference response
318 configuration information setting request
320 configuration information setting response
322 data process
324 sensor data
350 main screen
360, 382 connection buttons
362 setting button
364 data display button
370, 446 selection screens
380, 450 radio buttons
390 settings screen
400 change button
402 settings update button
410 name entry screen
420 name entry field
422 OK button
404, 424 cancel buttons
430 data display screen
440 sensor name field
442 data display field
444 "close" button
500, 550, 600, 700, 750 programs

## Claims

1. A data transmission device with a wireless communication unit, comprising:
a non-volatile memory configured to store an identifier uniquely assigned to the data transmission device,
the non-volatile memory being configured to be capable of further storing a name assigned to the data transmission device;
an advertising unit configured to incorporate the identifier in advertisement data and broadcast the advertisement data including the identifier via the wireless communication unit,
wherein, in a case where the name is stored in the non-volatile memory, the advertising unit is configured to incorporate the name, in addition to the identifier, in the advertisement data and broadcast the advertisement data; and
a communication control unit configured to initiate data transmission using the wireless communication unit to a data collection device serving as a data transmission destination in response to receiving a connection request specifying the identifier from the data collection device.

2. The data transmission device according to claim 1, further comprising a name storage unit configured to, after data transmission using the wireless communication unit to the data collection device is initiated, in response to a configuration information setting request, received from the data collection device, including a name to be assigned to the data transmission device, store the name in the non-volatile memory.

3. The data transmission device according to claim 1 or claim 2, wherein, of data transmitted by the communication control unit to the data collection device, data other than the advertisement data does not include the name stored in the non-volatile memory.

4. A data collection device comprising:
a wireless communication unit;
a display device;
a name storage unit configured to store an identifier and a name of one or more data transmission devices; and
a name display unit configured to, in response to receiving an identifier of each data transmission device from a data transmission device capable of communicating with the wireless communication unit, read the name stored in the name storage unit in association with the received identifier from the name storage unit, display the name on the display device, and allow a user to make a selection,
the wireless communication unit being configured to execute communication with a data transmission device that has an identifier corresponding to the name selected by the name display unit.

5. The data collection device according to claim 4, further comprising a name addition unit configured to, in response to the advertisement data, received by the wireless communication unit from the data transmission device, including the identifier and the name, add the identifier and the name in association to the name storage unit.

6. The data collection device according to claim 5, wherein the name addition unit is configured to, in response to the identifier included in the advertisement data, received by the wireless communication unit from the data transmission device, not being stored in the name storage unit, add the identifier to the name storage unit.

7. The data collection device according to claim 4 or claim 5, wherein the name display unit includes a selection unit configured to, in response to an instruction given to display a screen for selecting a communication peer, search the name storage unit for the identifier and the name of the data transmission device, and, if a corresponding name is found, display the name, and otherwise, display the received identifier, on the display device, allowing the user to make a selection.

8. The data collection device according to claim 6 or claim 7, further comprising a name change unit configured to, after communication with the data transmission device selected by the selection unit is initiated, receive an instruction from the user to change the name of the data transmission device, and store the identifier of the data transmission device and the entered name in association in the name storage unit.

9. The data collection device according to claim 8, wherein the name change unit includes a name candidate display unit configured to, in response to the advertisement data received from the data transmission device including an identifier of the data transmission device but not including a name, search the name storage unit for a name associated with the identifier included in the advertisement data, and if a corresponding name is stored in the name storage unit, display the name on the display device; and, otherwise, generate a name candidate for the data transmission device, display the name candidate on the display device, and receive a change to the name or the name candidate.

10. The data collection device according to claim 9, wherein the name candidate generated by the name candidate display unit includes a name candidate determined by sensor configuration of the data transmission device.

11. The data collection device according to claim 9, further comprising:
a data display unit configured to perform display related to data received from the data transmission device on the display device,
wherein the data display unit includes an identification information display unit configured to cause the data display unit to display the name or the identifier of the data transmission device according to whether the name corresponding to the identifier of the data transmission device is stored in the name storage unit.

12. The data transmission device according to claim 9, wherein:
the data transmission device is provided in a sensor-equipped cutting tool that includes a cutting tool and a sensor configured to monitor a state of the cutting tool, and has a function to transmit data output by the sensor to the data collection device and a function to notify the data collection device of a configuration of the sensor provided in the tool;
the data collection device further includes a name candidate storage unit configured to store the name candidate associated with the configuration of the sensor; and
the name candidate display unit includes a name candidate search unit configured to search the name candidate storage unit based on the configuration of the sensor received from the data transmission device and display the retrieved name candidate on the display device.

13. The data collection device according to claim 8, further comprising a name transmission unit configured to, in response to a change of the name of the data transmission device by the name change unit, transmit the name after the change to the data transmission device via the wireless communication unit.

14. A wireless system comprising a data transmission device and a data collection device that can wirelessly communicate with each other,
the data transmission device including:
a wireless communication unit;
a non-volatile memory configured to store an identifier uniquely assigned to the data transmission device,
the non-volatile memory being configured to be capable of further storing a name assigned to the data transmission device;
an advertising unit configured to incorporate the identifier in advertisement data and broadcast the advertisement data including the identifier via the wireless communication unit, wherein, in a case where the name is stored in the non-volatile memory, the advertising unit incorporates the name, in addition to the identifier, in the advertisement data and broadcasts the advertisement data; and
a communication control unit configured to initiate data transmission using the wireless communication unit to the data collection device serving as a data transmission destination in response to receiving a connection request specifying the identifier from the data collection device,
the data collection device including:
a wireless communication unit;
a display device;
a name storage unit configured to store an identifier and a name of one or more data transmission devices; and
a name display unit configured to, in response to receiving an identifier of the wireless communication unit included in each data transmission device from a data transmission device capable of communicating with the wireless communication unit of the data collection device, read the name stored in the name storage unit in association with the received identifier from the name storage unit, display the name on the display device, and allow a user to make a selection,
the wireless communication unit being configured to execute communication with a data transmission device that has an identifier corresponding to the name selected by the name display unit.

15. A method of controlling a data transmission device with a wireless communication unit,
the data transmission device including a non-volatile memory configured to store an identifier uniquely assigned to the data transmission device,
the non-volatile memory being configured to be capable of further storing a name assigned to the data transmission device,
the method comprising:
incorporating the identifier in advertisement data and broadcasting the advertisement data including the identifier via the wireless communication unit,
the broadcasting including, in a case where the name is stored in the non-volatile memory, incorporating the name, in addition to the identifier, in the advertisement data and broadcasting the advertisement data; and
initiating data transmission using the wireless communication unit to a data collection device serving as a data transmission destination in response to receiving a connection request specifying the identifier from the data collection device.

16. A data collection method in which a data collection device including a wireless communication unit, a display device, and a storage device collects data from one or more data transmission devices, the data collection method comprising:
storing, by the storage device, the identifier and the name of the one or more data transmission devices;
in response to receiving, by the wireless communication unit, an identifier of each data transmission device from the one or more data transmission devices, reading the name stored in the storage device in association with the received identifier, displaying the name on the display device, and allowing a user to make a selection; and
through communication of the wireless communication unit with a data transmission device that has an identifier corresponding to the name selected in the allowing a user to make a selection, collecting data from the data transmission device.

17. A computer program that causes a computer connected to a wireless communication unit, a display device, and a storage device to collect data from one or more data transmission devices, the computer program causing the computer to function to execute:
storing an identifier and a name of the one or more data transmission devices in the storage device;
in response to receiving, by the wireless communication unit, an identifier of each data transmission device from the one or more data transmission devices, reading the name stored in the storage device in association with the received identifier, displaying the name on the display device, and allowing a user to make a selection; and
through communication of the wireless communication unit with a data transmission device that has an identifier corresponding to the name selected in the allowing a user to make a selection, collecting data from the data transmission device.
